# EUROPÄISCHE PATENTSCHRIFT

(11) **EP 2 031 830 B1**
(45) Veröffentlichungstag und Bekanntmachung des Hinweises auf die Patenterteilung: **10.07.2013**
(21) Anmeldenummer: 08156450.2
(22) Anmeldetag: 19.05.2008
(51) Int. Cl.: H04L 29/08, H04L 12/28

(54) **Fernsteuerungseinrichtung**
Remote control device
Dispositif de télécommande

(30) Priorität: 18.05.2007 EP 07108487
(43) Veröffentlichungstag der Anmeldung: 04.03.2009
(73) Patentinhaber: Vodafone Holding GmbH, 40213 Düsseldorf (DE)
(72) Erfinder: Lu, Yang, 40489 Düsseldorf (DE); Wild, Peter, 47807 Krefeld (DE)

(56) Entgegenhaltungen:
- EP-A- 1 317 099
- WO-A-01/93546
- US-A1- 2004 117 038
- US-A1- 2004 162 092
- 3GPP: "Technical Specification Group Service and System Aspects; Service requirements for Personal Network Management (PNM); Stage 1 (Release 8)" 3GPP TS 22.259, Nr. V8.3.0, 26. März 2007 (2007-03-26), XP002510101 3GPP

## Beschreibung

### Technisches Gebiet

Die Erfindung betrifft eine Einrichtung zur Überwachung oder Fernsteuerung von elektrischen Haushaltsgeräten in einem privaten Bereich eines Benutzers, welche mit einem Netzwerk verbunden sind, wobei
a) die elektrische Haushaltsgeräte über ein lokales Netzwerk und mit einer Koordinationseinheit im privaten Bereich verbunden sind,
b) die Koordinationseinheit Verbindungen über ein Mobilfunknetz oder ein Festnetz herstellt, und wobei
c) eine als Mobilfunkendgerät oder Festnetzendgerät ausgebildete Auftragseinheit zum Generieren und Übermitteln von Befehlen zur Überwachung oder Fernsteuerungfiir die elektrischen Haushaltsgeräte und
d) eine Vermittlungseinheit mit einer Managementeinheit im Mobilfunknetz oder Festnetz zum Aufbau des Netzwerks zwischen der Auftragseinheit und den elektrischen Haushaltsgeräten über das Mobilfunknetz oder das Festnetz und über die Koordinationseinheit vorgesehen sind, und
e) die in dem Netzwerk integrierte Vermittlungseinheit mit der Managementeinheit die Befehle der Auftragseinheit empfängt und an die Geräte zur Überwachung oder Fernsteuerung weiterleitet.

### Stand der Technik

Zur Fernsteuerung und Überwachung von Geräten in einem privaten bzw. persönlichen Haus oder Heim sind verschiedene Systeme und Geräte bekannt. Mit diesen Lösungen soll insbesondere mehr Komfort, Wirtschaftlichkeit, Flexibilität und Sicherheit für die Bewohner geschaffen werden. Diese Ziele der Hausautomation, der Hausgerätautomation und der Vernetzung im Bereich der Unterhaltungselektronik werden in erster Linie durch eine Vernetzung von Haustechnik (z.B. Alarmanlagen, Heizungs- und Lichtsteuerung), Elektrohaushaltsgeräten (z.B. Herd, Kühlschrank) und Multimedia-Geräten (z.B. Fernseher, Videorekorder, zentraler Server) erreicht. Zur Vernetzung der oben genannten Geräte sind diverse Standards bekannt. Hierzu zählen beispielsweise die Normierung EN 50090, der Europäische Installationsbus (EIB), Universal Plug and Play (UPnP), Powerline Communications (PLC), d.h. die Möglichkeit zur Datenübertragung über das reguläre Stromnetz (im Haus, mit 220V Wechselspannung), usw. Zur Errichtung eines lokalen Netzes (LAN: Local Area Network) wird besonders bei Rechnern oft der Ethernet-Standard (IEEE 802.3) oder für kabellose Netzwerke der WLAN-(Wireless LAN)-Standard (IEEE 802.11) verwendet.

Um Geräte von außerhalb zu überwachen und fernzusteuern, werden die Geräte oder das Heimnetz bekannter Weise über ein Heim-Gateway (engl. Residential Gateway) oder Router mit einem öffentlichen Kommunikationsnetz, beispielsweise einem Festnetz oder Mobilfunknetz oder über diese mit dem Internet verbunden. Heimgeräte und -netze sind so mit einem Mobilfunkendgerät (z.B. Handy), einem Festnetzendgerät (z.B. Telefon) oder mit einem Computer über das Internet global überwachbar und ansteuerbar.

Aus der deutschen Offenlegungsschrift DE 199 04 544 A1 ist eine Fernsteuerung von Geräten in lokalen Netzwerken bekannt, bei der Steuerbefehle, Statusbefehle, Alarmmeldungen etc. von einem auswärtigen Steuergerät zu einer speziellen Heim-Schnittstelle des lokalen Netzwerkes übertragen werden. Die Heim-Schnittstelle konvertiert die nötigen Datenprotokolle, so dass diese über verschiedenartige Kommunikationsnetze übermittelt werden können. Das Steuergerät erreicht die Heim-Schnittstelle über eine Verbindung in einem Mobilfunknetz, Festnetz, Stromversorgungsnetz oder Breitbandkabelnetz.

Nachteilig bei den bekannten Einrichtungen zur Fernsteuerung von Geräten ist, dass Steuergeräte, wie beispielsweise Mobilfunkendgeräte, sehr umständlich zur Fernsteuerung durch einen Benutzer konfiguriert werden müssen. Dies gilt insbesondere bei neu hinzukommenden Steuergeräten. Zudem wird ein Benutzer bei mehreren zur Verfügung stehenden Steuergeräten oder möglichen Verbindungen nicht oder nur ungenügend bei einer Auswahl des optimalen Steuergeräts oder der optimalen Verbindung unterstützt. Dies wirkt sich besonders negativ und anwenderunfreundlich bei Daten aus, welche von den überwachten bzw. ferngesteuerten Geräten an ein Steuergerät gesendet werden. Solche Daten haben oft ganz unterschiedliche Formate (z.B. Textnachrichten von einer Heizungsanlage, Bild- oder Videodaten von einer Überwachungseinrichtung oder Audiodaten von einem Babyphone) und können teilweise nur von bestimmten Steuergeräten ausgewertet oder dargestellt werden. Wählt ein Benutzer andererseits eine unsichere oder ungeeignete Verbindung aus, so ist eine Überwachung oder Fernsteuerung von Geräten nur sehr umständlich, unsicher und unbefriedigend möglich. Eine flexible und benutzerfreundliche Konfiguration mit einer Berücksichtigung aller möglichen Steuergeräte und Verbindungsoptionen, insbesondere auch unter Beachtung des jeweils zu steuernden Geräts wird bei den bekannten Fernsteuerungs- bzw. Überwachungseinrichtungen nicht zur Verfügung gestellt.

Bekannt sind weiterhin so genannte persönliche oder private Netze (PN) im Mobilfunkbereich. Da immer mehr Mobilfunkteilnehmer bereits mehrere verschiedene Mobilfunkendendgeräte mit unterschiedlichen Funktionalitäten zur mobilen Kommunikation besitzen, erleichtern persönliche Netze den Einsatz und die Verwaltung der verschiedenen Mobilfunkendgeräte eines Teilnehmers. Mit Hilfe einer Managementeinrichtung (PNM: Personal Network Management) in einem Mobilfunknetz werden alle Mobilfunkendgeräte eines Teilnehmers vernetzt. Eine Konfiguration des PNM ist direkt durch den Teilnehmer oder mit Unterstützung eines Mobilfunknetzbetreibers möglich. Ein PN ermöglicht beispielsweise eine Weiterleitung eingehender Nachrichten je nach Datenformat an das am besten zur Darstellung geeignete Mobilfunkendgerät. Dem Fachmann ist die Funktionsweise von persönlichen Netzwerken z.B. aus der Spezifikation 3GPP TS 22.259 V8.3.0 (2006-06) geläufig. Da solche PN's nur für Mobilfunkendgeräte einsetzbar und nicht für eine Fernsteuerung von Geräten ausgelegt sind, ist eine Fernsteuerung, Überwachung und Koordination von Geräten in einem Haushalt über ein PN nur sehr eingeschränkt und mit erheblichem Aufwand möglich.

Ferner sind verschiedene Fernzugriffssysteme für Heimcomputer bekannt. Die Anmelderin bietet z.B. mit Vodafone-MeinPC einen sehr erfolgreichen Dienst zum globalen Fernzugriff auf Daten und Anwendungen eines Heim-PCs von jedem anderen Computer mit Internetzugang an. Über ein Internetportal kann ein Benutzer beispielsweise auf Bild- oder Videodateien zugreifen oder von dem Heim-PC empfangene TV- oder Radioprogramme betrachten bzw. anhören. Dazu sind Verbindungen mit sehr großer Bandbreite (z.B. DSL) notwendig. Eine Fernsteuerung oder Überwachung von Heimgeräten ist mit diesen Fernzugriffssystemen nur mit einem bedeutenden Einrichtungs- und Wartungsaufwand seitens eines Benutzers durchführbar.

Die US 2004/0162092 A1 offenbart ein System und ein Verfahren zum Betreiben und Steuern eines persönlichen Netzwerks aus mehreren Kommunikationsendgeräten eines Benutzers. Als Kommunikationsendgeräte werden insbesondere Mobilfunktelefone und Festnetztelefone genannt. In einem Kommunikationsnetzwerk eines Dienstanbieters sind eine Steuereinrichtung und eine Datenbank mit Profilen von persönlichen Netzwerken verschiedener Benutzer vorgesehen. In einem Profil wird für jedes Kommunikationsendgerät gespeichert, ob ein bestimmter Dienst für das jeweilige Kommunikationsendgerät aktiviert oder deaktiviert ist. Als Dienste sind beispielsweise Telefonie, Videotelefonie oder Datendienste möglich. Zusätzlich wird die eindeutige Telefonnummer jedes Kommunikationsendgeräts in dem Profil gespeichert. Bei eingehenden Anrufen ermittelt die Steuereinrichtung anhand der Datenbank das jeweils für den entsprechenden Dienst aktivierte Endgerät und leitet den Anruf an dieses weiter. Jedes der im persönlichen Netzwerk registrierten Kommunikationsendgeräte kann mittels einer speziellen Nachricht an die Steuereinrichtung eine Änderung im entsprechenden Profil vornehmen und auf diese Weise eine Aktivierung oder Deaktivierung eines anderen Kommunikationsendgerät im persönlichen Netzwerk für bestimmte Dienste durchführen.

In der EP 1 317 099 A2 wird ein Steuerungssystem und ein Verfahren zur Fernsteuerung von verschiedenen elektrische Haushaltsgeräten durch ein Mobilfunkendgerät beschrieben. Die elektrische Haushaltsgeräte sind dazu über ein lokales Netzwerk mit einem Heimgateway verbunden. Das Heimgateway verfügt neben einer Schnittstelle für das lokale Netzwerk auch über eine Schnittstelle für ein öffentliches Kommunikationsnetz, z.B. ein Festnetz oder ein Mobilfunknetz. Hierdurch wird eine Verbindung zwischen dem Mobilfunkendgerät und dem Heimgateway zum Fernsteuern der Haushaltsgeräte ermöglicht. Weiterhin ist eine Datenbank mit Informationen zur Steuerung jedes der Haushaltsgeräte in einem Kommunikationsnetzwerk, z.B. dem Internet, vorgesehen. Eine Adresse der Datenbank mit entsprechenden Informationen wird von dem jeweiligen Haushaltsgerät zur Verfügung gestellt. Für eine Fernsteuerung eines Haushaltsgeräts ruft zunächst das Mobilfunkendgerät oder das Heimgateway für das Mobilfunkendgerät mit der Adresse die Informationen zur Steuerung des Haushaltsgeräts von der Datenbank ab. Bei den Informationen kann es sich neben Befehlssätzen und Befehlsformaten mit entsprechenden Konvertierungsregeln auch um ausführbare Steuerungsprogramme handeln. Mit diesen Informationen ist eine entsprechende Konvertierung von Befehlen zur Steuerung des Haushaltsgeräts durch das Mobilfunkendgerät oder das Heimgateway möglich. Das Mobilfunkendgerät oder das Heimgateway nutzt die erhaltenen Informationen für eine Steuerung des Haushaltsgeräts durch das Mobilfunkendgerät. Auf diese Weise wird sichergestellt, dass für jedes elektrische Haushaltsgerät stets die richtigen Befehlsätze und Befehlsformate bzw. eine entsprechende Konvertierung von dem Mobilfunkendgerät zur Fernsteuerung verwendet werden.

Die US 2004/0117038 A1 beschreibt ein weiteres System und ein Verfahren zur Fernsteuerung und Fernüberwachung von Haushaltsgeräten. Die Haushaltsgeräte sind über ein lokales Netzwerk mit einem Medienverarbeitungssystem verbunden. Das Mediaverarbeitungssystem ist entweder als Setup-Box für einen Fernseher oder in einem Heim-PC vorgesehen und verfügt über einen Breitbandanschluss zu einem Mobilfunknetz oder einem Festnetz. Zur Fernsteuerung oder Fernüberwachung nutzt ein Benutzer einen weiteren PC, welcher ebenfalls an ein Kommunikationsnetzwerk angeschlossen ist. Dabei wird zwischen dem entfernten PC und dem Medienverarbeitungssystem ein Medienaustauschnetzwerk aufgebaut. Es ist aber auch eine Steuerung der Haushaltsgeräte mit einer lokalen Fernsteuerung für die Setup-Box oder durch den Heim-PC möglich. Dabei wird als grafische Anzeige der Fernseher oder ein Monitor des Heim-PCs benutzt.

### Offenbarung der Erfindung

Aufgabe der Erfindung ist es daher, die Nachteile des Standes der Technik zu vermeiden und die Koordinierung, Überwachung und Fernsteuerung von Geräten sicherer, benutzerfreundlicher und flexibler zu gestalten.

Erfindungsgemäß wird die Aufgabe bei einer Einrichtung der eingangs genannten Art zur Überwachung oder Fernsteuerung von elektrischen Haushaltsgeräten, welche mit einem Netzwerk verbunden sind, dadurch gelöst, dass
f) eine Konvertierungseinheit bei der Managementeinheit im Mobilfunknetz oder Festnetz vorgesehen ist, welche die Befehle zur Überwachung oder Fernsteuerung an einen für das jeweils angesprochene elektrische Haushaltsgerät verständlichen Befehlssatz anpasst.

Die Erfindung beruht grundsätzlich auf dem Prinzip, mit einer Auftragseinheit Befehle über ein Netzwerk nicht direkt an Geräte zu senden oder Daten von diesen zu empfangen, sondern Verbindungen über eine Vermittlungseinheit im Netzwerk aufzubauen. Als fernzusteuernde, zu überwachende oder zu koordinierende Geräte können beispielsweise elektrische Geräte in einem Haushalt oder eine Schnittstelle zu einem Heimnetzwerk vorgesehen sein. Die Vermittlungseinheit ist entweder als ganzes an einem Ort im Netzwerk vorgesehen oder besteht aus mehreren im Netzwerk verteilten Komponenten.

Durch die erfindungsgemäße Einrichtung mit einer Vermittlungseinheit wird sichergestellt, dass Befehle von verschiedenen Auftragseinheiten jeweils an das richtige Gerät gesendet werden. Umgekehrt werden Daten von Geräten über die Vermittlungseinheit immer an die jeweils richtige und zum Empfang der Daten geeignete Auftragseinheit gesendet. Dabei wird bei mehreren möglichen Verbindungen jeweils die am besten geeignete ausgewählt. Eine Konfiguration und Wartung der Vermittlungseinheit wird benutzerfreundlich durch einen Benutzer oder mit Unterstützung eines Netzwerkbetreibers bzw. Administrators vorgenommen. Eine Fernsteuerung und Überwachung von Geräten wird somit durch die Unterstützung verschiedener Auftragseinheiten und die Auswahl geeigneter Verbindungen für einen Benutzer sehr unkompliziert, flexibel und sicher durchführbar. Auch ist eine Nutzung neuer Auftragsgeräte (z.B. Mobilfunkendgeräte) zur Steuerung und Überwachung von Geräten dank der erfindungsgemäßen Einrichtung einfach und sicher möglich.

Die Vermittlungseinheit erlaubt mit verschiedenen Schnittstellen zu unterschiedlichen Netzwerken eine flexiblen Aufbau von Verbindungen zwischen einer Vielzahl von verschiedenen Auftragseinheiten und zu steuernden Geräte. Dabei wird je nach Auftragseinheit und ferngesteuertes Gerät eine bezüglich der Bandbreite und Sicherheit optimale Verbindung hergestellt oder ggf. eine geeignete Auftragseinheit ausgewählt. Die Vermittlungseinheit ist beispielsweise in einem Mobilfunk- oder Festnetz vorgesehen, wobei ein Netzwerkbetreiber bzw. Operator einen Benutzer bei einer Einrichtung, Wartung und Änderung von Auftragseinheiten oder fernzusteuernden Geräten effektiv unterstützen kann.

Mit als Mobilfunkendgerät oder Computer ausgebildeten Auftragseinheiten für eine Einrichtung zur Koordinierung, Überwachung und Fernsteuerung von Geräten wird dies weltweit von jedem Computer mit entsprechendem Netzwerkanschluss (z.B. am Arbeitsplatz, bei Bekannten oder im Internetcafé) oder von unterwegs mobil möglich. Dadurch wird eine Fernsteuerung für einen Benutzer wiederum sehr flexibel und anwenderfreundlich erreicht. Insbesondere lässt sich durch eine Fernsteuerung mit einem Computer eine komfortable Bedienung der Fernsteuerung, z.B. mit einer grafischen Benutzeroberfläche, erzielen.

Eine vorteilhafte Ausgestaltung der erfindungsgemäßen Einrichtung zur Koordinierung, Überwachung und/oder Fernsteuerung von Geräten sieht vor, dass das Netzwerk aus Fest- und/oder Funknetzteilen besteht. Verbindungen über Funknetze lassen sich ohne eine teure und umständliche Installation von Leitungen einrichten. Weiterhin schränken sie eine Mobilität von Endgeräten im Bereich des Funknetzes nicht ein. Fernzusteuernde Geräte mit einer entsprechenden Schnittstelle sind daher ohne großen Aufwand in das Netzwerk integrierbar und bewahren dabei eine eventuell vorhandene Mobilität. Andererseits wird ein Benutzer durch eine Auftragseinheit mit einer Funkschnittstelle vorteilhaft nicht in seiner Mobilität eingeschränkt. Festnetze bieten dagegen sehr sichere Verbindungen mit großer Bandbreite. Dadurch wird eine Fernsteuerung oder Überwachung von Geräten mit hoher Sicherheit und einer schnelle Übertragung von großen Datenmengen erreicht. Bei einer Nutzung von öffentlichen Mobilfunk- und Festnetzen für die erfindungsgemäße Einrichtung werden zudem kostengünstig bestehende Netzwerkinfrastrukturen genutzt und eine Fernsteuerung und Überwachung von Geräten wird unkompliziert von jedem Ort weltweit für einen Benutzer möglich. Idealerweise besteht das Netzwerk aus öffentlichen und privaten Fest- und Funknetzteilen und bietet einem Benutzer so die Vorzüge aller vier Netzarten. Eine Fernsteuerung ist so sehr flexibel und sicher mit einer Vielzahl von Steuergeräten und unterschiedlichen Verbindungen für zusteuernde Geräte durchführbar.

Bei der erfindungsgemäßen Einrichtung ist eine Konvertierungseinheit vorgesehen, welche die Befehle zur Koordinierung, Überwachung und/oder Fernsteuerung an einen für das jeweils angesprochene Gerät verständlichen Befehlssatz anpasst. Dabei wird sowohl ein Datenformat als auch ein Inhalt eines Befehls je nach überwachtem oder ferngesteuertem Gerät übersetzt. Das heißt beispielsweise, dass ein als Text von einer Auftragseinheit gesendeter Befehl "Wohnzimmerlampe an" inhaltlich von der Konvertierungseinheit als "Lampe 54, an" für eine Beleuchtungsanlage übersetzt wird und anschließend eine Anpassung des Befehls an das von der Beleuchtungsanlage verwendete Datenformat und Protokoll erfolgt. Durch die Konvertierungseinheit ist die erfindungsgemäße Einrichtung noch anwenderfreundlicher und sicherer zur Überwachung oder Fernsteuerung einer Vielzahl verschiedener Geräte mit unterschiedlichen Befehls- und Datenformaten nutzbar.

Gemäß einer vorteilhaften Ausgestaltung der erfindungsgemäßen Einrichtung zur Koordinierung, Überwachung und/oder Fernsteuerung von Geräten ist eine Prüfeinheit vorgesehen, welche die Identität und/oder Autorisation der Auftragseinheit überprüft. Mit Hilfe der Identität und der Autorisation der Auftragseinheit wird eine schnelle und sichere Zuordnung von überwachbaren und steuerbaren Geräten durch die erfindungsgemäße Einrichtung erreicht. Dies ermöglicht einerseits einen weitestgehend automatischen Verbindungsaufbau von der Auftragseinheit zu den gesteuerten oder überwachten Geräten. Andererseits wird ein unberechtigter Zugang von Dritten wirkungsvoll verhindert. Eine Fernsteuerung oder Überwachung wird dadurch für einen Benutzer unkompliziert und sicher durchführbar, ohne dass der Benutzer einen Missbrauch der Fernsteuerung oder Überwachung von Geräten befürchten muss.

Die Auftragseinheit ist in einer Ausbildung der erfindungsgemäßen Einrichtung zur Koordinierung, Überwachung und/oder Fernsteuerung von Geräten vorteilhaft als Mobilfunkendgerät für ein Mobilfunknetz, insbesondere nach dem GSM- oder UMTS-Standard ausgebildet. Eine Verwendung der Auftragseinheit durch einen Benutzer ist jederzeit und vom jedem Ort mobil möglich und erlaubt so eine einfache und unmittelbare Überwachung, Koordinierung oder Fernsteuerung von Geräten, vor allem auch während eine Bewegung des Benutzers. Weiterhin wird eine permanente Überwachung und Steuerung von Geräten ohne eine Einschränkung der Mobilität eines Benutzers ermöglicht.

In einer weiteren bevorzugten Ausformung der erfindungsgemäßen Einrichtung ist die Auftragseinheit als Computer, welcher mit dem Netzwerk gekoppelt ist, ausgebildet. Der Computer ist z.B. über ein Festnetz, ein Mobilfunknetz oder das Internet mit dem Netzwerk gekoppelt. Dabei wird vorteilhaft das Leistungspotential moderner Computer genutzt, um beispielsweise mit einer grafische Benutzerführung oder einer Darstellung oder Erstellung von Text-, Bild-, Audio-, Video- oder Multimedianachrichten eine Fernsteuerung und Überwachung von Geräten für einen Benutzer zu erleichtern. Weiterhin wird eine unkomplizierte und effiziente Fernsteuerung und Überwachung von Geräten weltweit von jedem Computer (z.B. am Arbeitsplatz, bei Bekannten, in einem Internetcafé, Hotel oder Flughafen) mit einem solchen Netzanschluss erzielt. Zudem verfügen stationäre Computer oft über einen günstigen und schnellen Netzwerkzugang (z.B. DSL: Digital Subscriber Line) und bieten einem Benutzer somit eine kostengünstig und sichere Fernsteuerung und Überwachung von Geräten.

Ferner wird eine vorteilhafte Ausgestaltung der erfindungsgemäßen Einrichtung zur Koordinierung, Überwachung und/oder Fernsteuerung von Geräten durch eine separate Koordinationseinheit, welche die Koordination zwischen den Geräten verwaltet, erreicht. Durch die Koordinationseinheit wird die Steuerung und Überwachung von verschiedenen Geräten aufeinander abgestimmt. Beispielsweise ist bei einem Ausschalten von Beleuchtungsmitteln gleichzeitig ein Aktivieren einer Alarmanlage und ein Verringerung der Wärmeerzeugung einer Heizung denkbar. Damit wird eine Fernsteuerung von Geräten für einen Benutzer wesentlich einfacher und sicherer. Eine separate Koordinationseinheit wird z.B. unabhängig von anderen Bestandteilen der erfindungsgemäßen Einrichtung in der Nähe der zu steuernden Geräte eingesetzt und verfügt daher über einen direkten, schnellen und sicheren Zugriff auf die Geräte. Dadurch wird die Sicherheit und Wirksamkeit der erfindungsgemäßen Einrichtung erhöht.

Weitere Ausgestaltungen und Vorteile ergeben sich aus dem Gegenstand der Unteransprüche, sowie der Zeichnung mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

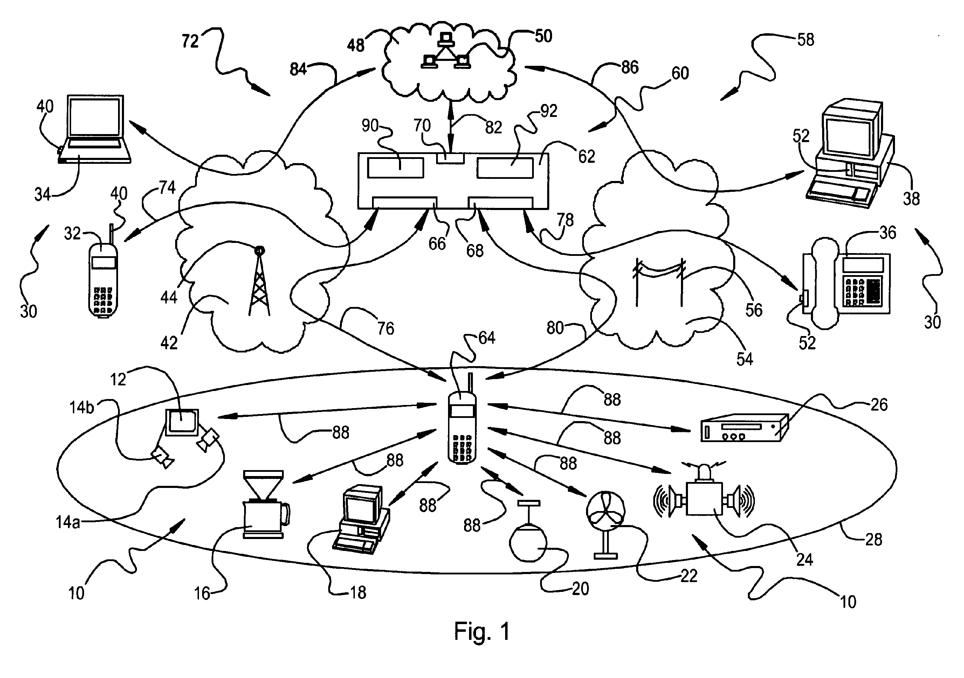

- Fig. 1: zeigt in einer schematischen Prinzipskizze ein Ausführungsbeispiel der Einrichtung zur Koordinierung, Überwachung und Fernsteuerung von Geräten über ein Netzwerk in einem privaten Bereich.

### Bevorzugtes Ausführungsbeispiel

In Fig. 1 werden mit 10 verschiedene fernzusteuernde, zu überwachende und/oder zu koordinierende Geräte bezeichnet. Die Geräte 10 bestehen beispielhaft aus einer Überwachungseinrichtung 12 mit Kameras 14a, 14b, einer Kaffeemaschine 16, einem PC (Personal Computer) 18, einem Beleuchtungssystem 20, einer Klimaanlage 22, einer Alarmanlage 24 und einem Audio-Video-System 26 zum Aufnehmen und Wiedergeben von Audio-, Video- oder Multimediadaten. Es sind aber auch andere Geräte 10 denkbar. Wesentliches Merkmal der Geräte 10 ist die Fähigkeit, Daten und Befehle senden und/oder empfangen und auf diese reagieren zu können. Insbesondere ist eine Vernetzung von mehreren Geräten 10 in einem lokalen Netzwerk möglich. Diese vernetzten Geräte 10 werden dann gemeinsam über das lokale Netzwerk (z.B. ein Heimnetz) gesteuert, wobei das lokale Netzwerk quasi als ein Gerät 10, beispielsweise über einen Rooter oder ein Gateway ferngesteuert, überwacht und koordiniert wird.

Die Geräte 10 befinden sich vorzugsweise in einem privaten Bereich 28 eines Benutzers, beispielsweise einer Wohnung oder einem Haus, einem Auto oder Wohnmobil, einer Yacht oder einem Arbeitsplatz oder Büro des Benutzers. Auch ist eine Verteilung der Geräte 10 über mehrere private Bereiche 28 eines Benutzers oder eine Gruppierung von Benutzern zur Bildung eines oder mehrerer gemeinsamer privater Bereiche 28 zur gemeinsamen Überwachung, Steuerung und Koordinierung von darin enthaltenen Geräten 10 möglich. Ferner ist eine Überwachung und Steuerung von öffentlich zugänglichen Geräten 10 eines Benutzers, z.B. eines Getränkeautomaten denkbar.

Zur Steuerung, Überwachung und Koordination der Geräte 10 verfügt ein Benutzer über verschiedene Auftragseinheiten 30. Vorzugweise wird der Benutzer als Auftragseinheiten 30 ihm bereits zur Kommunikation zur Verfügung stehende Geräte benutzen. Es ist aber auch ein Einsatz von speziell zur Fernsteuerung und -überwachung ausgebildeten Auftragseinheiten 30 möglich. Beispielhaft verfügt der Benutzer als Auftragseinheiten 30 über zwei Mobilfunkendgeräte 32, 34 zur kabellosen Kommunikation und zwei Festnetzendgeräte 36, 38 zur leitungsgebundenen Kommunikation oder hat Zugriff auf diese. Die Mobilfunkendgeräte 32, 34 und die Festnetzendgeräte 36, 38 weisen jeweils unterschiedliche Funktionalitäten auf.

Die Mobilfunkendgeräte 32, 34 können beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 40 (z.B. eine PMCCIA-Karte) sein. Mit den Mobilfunkendgeräten 32, 34 ist eine Kommunikation über ein Mobilfunknetz 42, beispielsweise nach dem GSM-, GPRS-, HSCSD-, EDGE-, CDMA-, CDMA2000-, UMTS-, einem WLAN-Standard (z.B. IEEE 802.11), einem Standard der 4. Generation, einer adhoc-Verbindung oder satellitengestützt möglich. Dem Fachmann sind solche Mobilfunknetze mit den entsprechenden Bestandteilen geläufig. Der Einfachheit halber wird das Mobilfunknetz 42 deshalb nur durch eine Wolke mit einem darin enthaltenen Funkmast 44 stilisiert dargestellt.

Das Mobilfunkendgerät 34 besitzt weiterhin die Fähigkeit, über das Mobilfunknetz 42 mit dem Internet 48 bzw. darüber erreichbare Server und Dienste, z.B. mit einem Web-Browser zu kommunizieren. Aufbau und Funktionsweise des Internet 48 sind dem Fachmann ebenfalls bekannt. Das Internet 48 wird daher der Einfachheit halber als Wolke mit darin enthaltenen Rechnern 50 stilisiert dargestellt.

Die Festnetzendgeräte 36, 38 können beispielsweise ein Telefon, eine Telefonanlage, ein Faxgerät, ein stationärer Rechner (z.B. PC) oder mobiler Rechner (z.B. Notebook, PDA) oder ein anderes Gerät mit einer eingebauten oder über eine Schnittstelle angeschlossenen Festnetzschnittstelle 52 (z.B. ein Modem oder ein Rooter) sein. Mit den Festnetzendgeräten 36, 38 ist eine Kommunikation über ein Festnetz 54, beispielsweise nach dem bekannten analogen, ISDN-, DSL- oder einem LAN- (z.B. Ethernet, IEEE 802.3) Standard möglich. Auch das Festnetz 54 wird der Einfachheit halber durch eine Wolke mit darin enthalten Telegrafenmasten 56 stilisiert dargestellt. Ferner ist das Festnetzendgerät 38 über das Festnetz 54 in der Lage, mit dem Internet 48 bzw. darüber erreichbare Komponenten oder Dienste zu kommunizieren, z.B. mit einem Web-Browser.

Weiterhin ist eine Einrichtung 58 zur Steuerung, Überwachung und Koordination der Geräte 10 vorgesehen. Die Einrichtung 58 enthält neben den Auftragseinheiten 30 eine Vermittlungseinheit 60. Die Auftragseinheiten 30 senden und empfangen Daten von den Geräten 10 nicht direkt, beispielsweise über das Mobilfunknetz 42 oder das Festnetz 54, sonder über die Vermittlungseinheit 60. Die Vermittlungseinheit 60 enthält in diesem Ausführungsbeispiel eine Managementeinheit 62 und eine separate Koordinationseinheit 64, sowie einer Vielzahl von Schnittstellen 66 für das Mobilfunknetz, Schnittstellen 68 für das Festnetz 54 und Schnittstellen 70 für das Internet 48, welche in der Managementeinheit 62 vorgesehen sind.

Die Vermittlungseinheit 60 baut mit Hilfe der Managementeinheit 62 über die Schnittstellen 62 und einem oder mehreren Mobilfunknetzen 42 der oben genannten Art, die Schnittstellen 68 und einem oder mehreren Festnetzen 54 der ebenfalls oben genannten Art und über die Schnittstellen 70 und dem Internet 48 ein Netzwerk 72 zwischen den Auftragseinheiten 30 und den Geräten 10 in einem oder mehreren privaten Bereichen 28 auf. Dabei können auch Netzwerke in einem privaten Bereich 28, z.B. ein so genanntes PAN (Personal Area Networks) oder Heimnetzwerk mit eingebunden werden. Für das Netzwerk 72 kann die Managementeinheit 60 beispielsweise eine Verbindung (Pfeil 74) zum Mobilfunkendgerät 32 und eine Verbindung (Pfeil 76) zu der separaten Koordinationseinheit 64 über das Mobilfunknetz 42 einrichten. Weiterhin ist eine Verbindung (Pfeil 78) zu dem Festnetzendgerät 36 oder eine Verbindung (Pfeil 80) zu der Koordinationseinheit 64 mit der Managementeinheit 60 möglich. Schließlich ist eine Verbindung (Pfeil 82) mit dem Internet 48 und über das Internet 48 eine Verbindung (Pfeil 84) über das Mobilfunknetz 42 zum Mobilfunkendgerät 34 oder eine Verbindung (Pfeil 86) im Festnetz 54 zum Festnetzendgerät 38 von der Managementeinheit 62 einrichtbar.

Die separate Koordinationseinheit 64 ist in diesem Ausführungsbeispiel direkt in einem privaten Bereich 28 angeordnet und besteht beispielsweise aus einem Mobilfunkendgerät oder einem Festnetzendgerät. Idealerweise kann die Koordinationseinheit 64 sowohl über das Mobilfunknetz 42 als auch über das Festnetz 54 Verbindungen 76, 80 herstellen. Die Koordinationseinheit 64 ist entweder direkt oder über ein Gateway oder Rooter mit den Geräten 10 kabellos oder leitungsgebunden verbunden (Verbindungen 88, Pfeile). Bei mehreren privaten Bereichen 28 ist ein Einsatz von einer Koordinationseinheit 64 für jeden privaten Bereich 28 und somit ein Einsatz von mehreren Koordinationseinheiten 64 in eine Vermittlungseinheit 60 möglich.

Ferner verfügt die Einrichtung 58 über eine Prüfeinheit 90 zur Überprüfung der Identität und Autorisierung verschiedener Auftragseinheiten 30 oder deren Benutzer und eine Konvertierungseinheit 92. Mit der Konvertierungseinheit 92 werden Daten oder Befehle an ein bestimmtes Gerät 10 oder eine Auftragseinheit 30 angepasst bzw. übersetzt. Beispielsweise können Sprach-, SMS-, MMS- oder Faxnachrichten, E-Mails oder Nachrichten in einem anderen Format in ein für das jeweilige Gerät 10 oder die jeweilige Auftragseinheit 30 verarbeitbares Format konvertiert werden. Ferner ist eine physikalische Übersetzung bzw. Anpassung von Signalen oder Protokollen, oder eine inhaltliche Übersetzung einer Nachricht für Geräte 10 oder Auftragseinheiten 30 möglich.

Die Managementeinheit 62 ist vorzugsweise in einem Mobilfunknetz 42 oder einem Festnetz 54 angeordnet. Dadurch haben die Schnittstellen 66, 68, 70 ein unmittelbaren Zugriff auf beteiligte Netzwerke 42, 54 und es ist eine Unterstützung eines Benutzers bei einer Konfiguration oder Wartung durch einen Netzwerkbetreiber einfach durchführbar. In alternativen Ausführungen kann die Managementeinheit 62 an anderen Orten des Netzwerks 72 angeordnet sein. Auch ist eine Anordnung der Koordinationseinheit 64 und aller anderen Komponenten zentral bei der Managementeinheit 62 oder eine dezentrale Verteilung einzelner oder aller Komponenten im Netzwerk 72 möglich.

Zur Steuerung, Überwachung und/oder Koordinierung eines oder mehrerer Geräte 10 in einem oder mehreren privaten Bereichen 28 verwendet ein Benutzer eine ihm zur Verfügung stehende Auftragseinheit 30, beispielsweise ein Mobilfunkendgerät oder mobilen Computer, ein Telefonanlage, Fax oder Computer bei Bekannten oder am Arbeitsplatz oder ein öffentliches Telefon oder ein öffentlicher Computer (z.B. in einem Internetcafé oder Hotel). Mit der Auftragseinheit 30 sendet der Benutzer über das Netzwerk 72 mit einer der Verbindungen 74, 78, 82, 84, 86 einen Befehl als Sprachnachricht, Tastatur-Signalfolge (DTMF Dual Tone Multiple Frequency), SMS, MMS, E-Mail oder einem anderen Format an die Vermittlungseinheit 60.

In der Vermittlungseinheit 60 wird der Befehl von der Managementeinheit 62 empfangen und mit der Prüfeinheit 90 der Benutzer oder die Auftragseinheit 30 identifiziert und eine Berechtigung zur Steuerung des Geräts 10 überprüft. Dabei können auch mehrere Benutzer mit ihren Auftragseinheit 30 in der Managementeinheit 62 zur Steuerung oder Überwachung eines Geräts 10 registriert sein. Weiterhin ermittelt die Managementeinheit 62 den zum Gerät 10 gehörenden privaten Bereich 28, denn jeder Benutzer kann mehrere private Bereiche 28 in der Managementeinheit 62 festlegen. Bei einer kombinierten Steuerung von mehreren Geräten 10 durch einen Befehl wird entsprechend eine Berechtigung für alle diese Geräte 10 geprüft und der private Bereich 28 für jedes Gerät 10 ermittelt. Anschließend wird der Befehl nötigenfalls von der Konvertierungseinheit 92 konvertiert und von der Managementeinheit 62 über die am besten geeignete Verbindung 76 oder Verbindung 80 an die jeweilige Koordinationseinheit 64 übermittelt. Die Koordinationseinheit 64 leitet den Befehl direkt oder über ein Gateway oder Rooter über eine Verbindung 88 an das entsprechende Gerät 10 weiter. Dabei koordiniert die Koordinationseinheit 64 eine gleichzeitige Steuerung oder Überwachung von mehreren Geräten 10 durch einen Befehl.

Durch die Einrichtung 58 zur Steuerung, Überwachung und Koordination von Geräten 10 muss ein Benutzer sich nicht mehr selber um eine direkte Verbindung zu einem zu steuernden Gerät 10 kümmern. Die Einrichtung 58 übernimmt benutzerfreundlich und sicher eine Weiterleitung eines Befehls an ein oder mehrere Geräte 10 in einem oder mehreren privaten Bereichen 28 und führt dabei eine sichere Identifizierung und Berechtigungsprüfung und ggf. eine automatische Konvertierung und Vervielfältigung eines Befehls durch.

Sendet umgekehrt ein Gerät 10 Daten, beispielsweise als akustische Signale, Sprach-, Text-, SMS-, Fax-, oder MMS-Nachricht oder als E-Mail, Video- oder Multimediadaten an einen Benutzer, so werden diese Daten über eine Verbindung 88, eine Koordinationseinheit 64 und eine Verbindung 76, 80 an die Managementeinheit 62 übermittelt. Dabei koordiniert die Koordinationseinheit 64 bei mehreren gleichzeitig eintreffenden Daten verschiedener Geräte 10 die Übermittlung an die Managementeinheit 62. Die Managementeinheit 62 überprüft, welche von den vorhandenen und angemeldeten Auftragseinheiten 30 eines Benutzers am besten zum Empfang der Daten geeignet ist, und sendet die Daten nach einer eventuell notwendigen Konvertierung durch die Konvertierungseinheit 92 über eine optimale Verbindung 74, 78, 82, 84, 86 an die gewählte Auftragseinheit 30. Es ist auch eine gleichzeitige Übermittlung von Daten an mehrere Auftragseinheiten 30 eines oder mehrerer Benutzer möglich.

So wird mit der Einrichtung 58 zur Steuerung, Überwachung und Koordination von Geräten 10 sichergestellt, das Daten bzw. Nachrichten einen Benutzer immer erreichen, auch wenn dieser in bestimmten Zeiträumen über verschieden Auftragseinheiten 30 verfügt. Zudem wird automatisch und benutzerfreundlich das jeweils am besten zur Darstellung der Daten geeignete Auftragsgerät ausgewählt. Für einen Benutzer wird komfortabel eine optimale Ausnutzung des Leistungsvermögens moderner Kommunikationsnetze und -geräte zur Steuerung und Überwachung von Geräten, beispielsweise durch Video- und Multimediadatentragung erreicht.

Die Managementeinheit 62 wird durch den Benutzer mit Unterstützung eines Mobilfunknetz- oder Festnetzbetreibers konfiguriert und gewartet. Insbesondere lassen sich unkompliziert neue Auftragseinheiten 30, private Bereiche 28 oder Geräte 10 in das Netzwerk 72 einfügen oder nicht mehr benötigte entfernen. So sind auch Auftragseinheiten 30, private Bereiche 28 oder Geräte 10 von anderen Benutzern in das Netzwerk 72 problemlos integrierbar. Die Einrichtung 58 erlaubt so eine sehr flexible Gestaltung einer Steuerung, Überwachung und Koordination von Geräten 10.

### Bezugszeichenliste

- 10: Geräte
- 12: Überwachungseinrichtung
- 14a, b: Kameras
- 16: Kaffeemaschine
- 18: PC
- 20: Beleuchtungssystem
- 22: Klimaanlage
- 24: Alarmanlage
- 26: Audio-Video-System
- 28: privater Bereich
- 30: Auftragseinheiten
- 32: Mobilfunkendgerät
- 34: Mobilfunkendgerät (internetfähig)
- 36: Festnetzendgerät
- 38: Festnetzendgerät (internetfähig)
- 40: Mobilfunkschnittstelle
- 42: Mobilfunknetz
- 44: Funkmast
- 48: Internet
- 50: Computer
- 52: Festnetzschnittstelle
- 54: Festnetz
- 56: Telegrafenmasten
- 58: Einrichtung zur Steuerung
- 60: Vermittlungseinheit
- 62: Managementeinheit
- 64: Koordinationseinheit
- 66: Schnittstellen Mobilfunknetz
- 68: Schnittstellen Festnetz
- 70: Schnittstellen Internet
- 72: Netzwerk
- 74: Verbindung 32 - 60
- 76: Verbindung 60 - 64 Mobilfunknetz
- 78: Verbindung 52 - 60
- 80: Verbindung 60 - 64 Festnetz
- 82: Verbindung 60 - Internet
- 84: Verbindung Internet - 34
- 86: Verbindung Internet - 38
- 88: Verbindungen 64 - 10
- 90: Prüfeinheit
- 92: Konvertierungseinheit

## Patentansprüche

1. Einrichtung (58) zur Überwachung oder Fernsteuerung von *elektrischen Haushaltsgeräten* (10) *in einem privaten Bereich (28) eines Benutzers,* welche mit einem Netzwerk (72) verbunden sind, *wobei*
*a) die elektrischen Haushaltsgeräte (10) über ein lokales Netzwerk und mit einer Koordinationseinheit (64) im privaten Bereich* (*28) verbunden sind,*
*b) die Koordinationseinheit (64) Verbindungen über ein Mobilfunknetz (42) oder ein Festnetz (54) herstellt, und wobei*
*c)* eine *als Mobilfunkendgerät (32, 34) oder Festnetzendgerät (36, 38) ausgebildete* Auftragseinheit (30) zum Generieren und Übermitteln von Befehlen zur Überwachung oder Fernsteuerung für die *elektrischen Haushaltsgeräte* (10) *und*
*d) eine Vermittlungseinheit (60) mit einer Managementeinheit (62) im Mobilfunknetz (42) oder Festnetz (54) zum Aufbau des Netzwerks (72) zwischen der Auftragseinheit (30) und den elektrischen Haushaltsgeräten (10) über das Mobilfunknetz (42) oder das Festnetz (54) und über die Koordinationseinheit (64) vorgesehen sind, und*
*e) die* in dem Netzwerk (72) integrierte Vermittlungseinheit (60) *mit der Managementeinheit (62)* die Befehle der Auftragseinheit (30) empfängt und an die Geräte (10) zur Überwachung oder Fernsteuerung weiterleitet,
***dadurch gekennzeichnet, dass***
*f) eine Konvertierungseinheit (92) bei der Managementeinheit (62) im Mobilfunknetz (42) oder Festnetz (54)vorgesehen ist, welche die Befehle zur-Überwachung oder Fernsteuerung an einen für das jeweils angesprochene elektrische Haushaltsgerät (10) verständlichen Befehlssatz anpasst.*

2. Einrichtung (58) zur Überwachung oder Fernsteuerung von *elektrischen Haushaltsgeräten* (10) nach Anspruch 1, **dadurch gekennzeichnet, dass** das Netzwerk (72) aus Fest- (54) und/oder Funknetzteilen (42) besteht.

3. Einrichtung (58) zur Überwachung oder Fernsteuerung von *elektrischen Haushaltsgeräten* (10) nach einem der Ansprüche 1 bis 2, **dadurch gekennzeichnet, dass** eine Prüfeinheit (90) vorgesehen ist, welche die Identität und/oder Autorisation der Auftragseinheit (30) überprüft.

4. Einrichtung (58) zur Überwachung oder Fernsteuerung von *elektrischen Haushaltsgeräten* (10) nach einem der Ansprüche 1 bis 3, **dadurch gekennzeichnet, dass** die Auftragseinheit (30) als Mobilfunkendgerät (32, 34) für ein Mobilfunknetz (42) nach dem GSM- oder UMTS-Standard ausgebildet ist.

5. Einrichtung (58) zur Überwachung oder Fernsteuerung von *elektrischen Haushaltsgeräten* (10) nach einem der Ansprüche 1 bis 3, **dadurch gekennzeichnet, dass** die Auftragseinheit (30) als Computer (34, 38), welcher mit dem Netzwerk (72) gekoppelt ist, ausgebildet ist.

6. Einrichtung (58) zur Überwachung oder Fernsteuerung von *elektrischen Haushaltsgeräten* (10) nach einem der Ansprüche 1 bis 5, ***dadurch* gekennzeichnet, *dass*** *die* Koordinationseinheit (64) die Koordination zwischen den Geräten (10) verwaltet.

## Claims

1. Device (58) for monitoring or remote control of electric household appliances (10) in a private area (28) of a user which are connected to a network (72), wherein
a) the electric household appliances (10) are connected via a local network and with a coordination unit (64) in the private area (28),
b) the coordination unit (64) establishes connections via a mobile radio network (42) or a fixed network (54), and wherein
c) a mobile terminal (32, 34) or fixed-network terminal (36, 38) is provided as an instruction unit (30) for generating and transmitting of instructions for monitoring or remote control of electric household appliances (10) and
d) a switching unit (60) having a management unit (62) is provided in the mobile radio network (42) or fixed network (54) for establishment of the network (72) between the instruction unit (30) and the electric household appliances (10) via the mobile radio network (42) or the fixed network (54) and via the coordination unit (64), and
e) the switching unit (60) with the management unit (62) integrated in the network (72) receives instructions of the instruction unit (30) and transmits the instructions to the appliances (10) for monitoring or remote control,
**characterized in that**
f) a conversion unit (92) is provided at the management unit (62) in the mobile radio network (42) or fixed network (54) for adapting the instructions for monitoring or remote control into an instruction set which is understandable for the addressed electric household appliance (10) respectively.

2. Device (58) for monitoring or remote control of electric household appliances (10) according to claim 1, **characterized in that** the network (72) consists of fixed (54) and / or wireless network portions (42).

3. Device (58) for monitoring or remote control of electric household appliances (10) according to any one of claims 1 to 2, **characterized in that** a test unit (90) is provided, which verifies the identity and / or authorization of the instruction unit (30).

4. Device (58) for monitoring or remote control of electric household appliances (10) according to any one of claims 1 to 3, **characterized in that** the instruction unit (30) is a mobile terminal (32, 34) for a mobile radio network (42) according to the GSM or UMTS standard.

5. Device (58) for monitoring or remote control of electric household appliances (10) according to any one of claims 1 to 3, **characterized in that** the instruction unit (30) is a computer (34, 38) which is coupled to the network (72).

6. Device (58) for monitoring or remote control of electric household appliances (10) according to any one of claims 1 to 5, **characterized in that** the coordination unit (64) manages the coordination between the appliances (10).

## Revendications

1. Dispositif (58) pour surveiller ou télécommander des appareils électroménagers (10) situés dans une zone privée (28) d'un utilisateur et connectés à un réseau (72),
(a) les appareils électroménagers (10) étant connectés par l'intermédiaire d'un réseau local à une unité de coordination (64) située dans la zone privée (28),
(b) l'unité de coordination (64) établissant des connexions par l'intermédiaire d'un réseau de radiotéléphonie mobile (42) ou un réseau de téléphonie fixe (54), et
(c) une unité de travail (30) réalisée sous forme de terminal de radiotéléphonie mobile (32, 34) ou de terminal de téléphonie fixe (36, 38) étant prévue pour générer et transmettre des instructions pour la surveillance ou la télécommande des appareils électroménagers (10) et,
(d) une unité de commutation (60) munie d'une unité de gestion (62) étant prévue dans le réseau de radiotéléphonie mobile (42) ou le réseau de téléphonie fixe (54) afin de constituer le réseau (72) entre l'unité de travail (30) et les appareils électroménagers (10) par l'intermédiaire du réseau de radiotéléphonie mobile (42) ou du réseau de téléphonie fixe (54) et par l'intermédiaire de l'unité de coordination (64), et
(e) l'unité de commutation (60) intégrée dans le réseau (72) et munie de l'unité de gestion (62) recevant les instructions de l'unité de travail (30) et les faisant suivre aux appareils (10) à des fins de surveillance ou de télécommande,
**caractérisé en ce que**
(f) une unité de conversion (92) qui adapte les instructions destinées à la surveillance ou la télécommande à un jeu d'instructions compréhensibles pour chaque appareil électroménager (10) sollicité est prévue dans l'unité de gestion (62) dans le réseau de radiotéléphonie mobile (42) ou le réseau de téléphonie fixe (54).

2. Dispositif (58) pour la surveillance ou la télécommande d'appareils électroménagers (10) selon la revendication 1, **caractérisé en ce que** le réseau (72) se compose de parties de réseau de téléphonie fixe (54) et/ou de réseau de radiotéléphonie mobile (42).

3. Dispositif (58) pour la surveillance ou la télécommande d'appareils électroménagers (10) selon l'une quelconque des revendications 1 à 2, **caractérisé en ce qu'**il est prévu une unité de vérification (90) vérifiant l'identité et/ou l'autorisation de l'unité de travail (30).

4. Dispositif (58) pour la surveillance ou la télécommande d'appareils électroménagers (10) selon l'une quelconque des revendications 1 à 3, **caractérisé en ce que** l'unité de travail (30) est réalisée sous forme de terminal de radiotéléphonie mobile (32, 34) pour un réseau de radiotéléphonie mobile (42) d'après la norme GSM ou UMTS.

5. Dispositif (58) pour la surveillance ou la télécommande d'appareils électroménagers (10) selon l'une quelconque des revendications 1 à 3, **caractérisé en ce que** l'unité de travail est réalisée sous forme d'ordinateur (34, 38) couplé au réseau (72).

6. Dispositif (58) pour la surveillance ou la télécommande d'appareils électroménagers (10) selon l'une quelconque des revendications 1 à 5, **caractérisé en ce que** l'unité de coordination (64) gère la coordination entre les appareils (10).
